# EUROPÄISCHE PATENTSCHRIFT

(11) **EP 3 295 017 B1**
(45) Veröffentlichungstag und Bekanntmachung des Hinweises auf die Patenterteilung: **14.02.2024**
(21) Anmeldenummer: 16723983.9
(22) Anmeldetag: 10.05.2016
(51) Int. Cl.: F02N 5/04, F02N 11/00, B60K 6/448, B60K 6/52, B60W 10/02, B60W 10/06, B60W 10/08, B60W 20/10, B60W 30/192, B60K 6/26

(54) **VERFAHREN ZUM STARTEN EINER VERBRENNUNGSKRAFTMASCHINE EINES HYBRIDALLRADFAHRZEUGES**
METHOD FOR STARTING THE INTERNAL COMBUSTION ENGINE OF A FOUR-WHEEL DRIVE HYBRID VEHICLE
PROCÉDÉ POUR REDÉMARRER UN MOTEUR À COMBUSTION D'UN VÉHICULE HYBRIDE À QUATRE ROUES MOTRICES

(30) Priorität: 11.05.2015 DE 102015208721
(43) Veröffentlichungstag der Anmeldung: 21.03.2018
(73) Patentinhaber: Volkswagen Aktiengesellschaft, 38440 Wolfsburg (DE)
(72) Erfinder: FELSCH, Christian, 38104 Braunschweig (DE); RIELING, Jörg, 38116 Braunschweig (DE); PROCHAZKA, David, 38446 Wolfsburg (DE); ZILLMER, Michael, 38173 Sickte (DE)
(74) Vertreter: MFG Patentanwälte Meyer-Wildhagen Meggle-Freund Gerhard PartG mbB
(86) Internationale Anmeldenummer: PCT/EP2016/060385
(87) Internationale Veröffentlichungsnummer: WO 2016/180806

(56) Entgegenhaltungen:
- DE-A1-102012 211 920
- DE-A1-102013 016 756
- DE-A1-102014 200 253

## Beschreibung

Die Erfindung betrifft ein Verfahren zum Starten einer Verbrennungskraftmaschine eines Hybridfahrzeuges mit einem Triebstrang und ein Hybridfahrzeug mit einem Triebstrang. Hybridfahrzeuge haben typischerweise sowohl eine Verbrennungskraftmaschine als auch eine Elektromaschine, die beide einzeln oder auch gleichzeitig je nach momentaner Betriebsart ein Antriebsmoment zum Antreiben eines Antriebsrades bereitstellen können.

Ein Hybridfahrzeug, bei dem gleichzeitig das Antriebsmoment von einer Elektromaschine und einer Verbrennungskraftmaschine bereitgestellt wird, wird auch Parallelhybrid genannt. Bei einem sogenannten Einwellen-Parallelhybrid sind typischerweise auf einer Getriebeeingangswelle sowohl die Verbrennungskraftmaschine als auch die erste Elektromaschine angeordnet. Solche Antriebskonzepte sind meist als Frontantrieb realisiert.

Es gibt auch Hybridfahrzeuge mit einer zusätzlichen elektrischen Hinterachse. Mit einer elektrifizierten Hinterachse kann z.B. ein elektrischer Allradantrieb, eine Steigerung der Fahrleistung und/oder eine Verbesserung der Fahrdynamik aufgrund des Antriebs sowohl der Vorder- als auch der Hinterachse hergestellt werden.

Eine Hybridsteuerung, die auch Hybridkoordinator genannt wird, steuert den jeweiligen Betriebsmodus, wie z.B. reines elektrisches Fahren über eine der beiden Antriebsachsen, reines Fahren mit Verbrennungskraftmaschine oder Mischbetrieb, bzw. Antrieb über beide Achsen. So ein Antriebskonzept ist beispielsweise aus der WO 2008/142076 A1 bekannt.

Ist das Hybridfahrzeug in einem Betriebsmodus, in dem es rein elektrisch fährt, ist die Verbrennungskraftmaschine typischerweise ausgeschaltet. Fordert die Hybridsteuerung aufgrund z.B. einer höheren Leistungsanforderung oder niedriger Batterieleistung ein Antriebsmoment von der Verbrennungskraftmaschine an, so muss die Verbrennungskraftmaschine wieder gestartet werden.

Für den Start bzw. Wiederstart einer Verbrennungskraftmaschine eines Hybridfahrzeugs sind verschiedene Ausführungen im Stand der Technik bekannt.

Aus der deutschen Offenlegungsschrift DE 10 2009 058 133 A1 ist ein Hybridfahrzeug bekannt, bei dem eine Verbrennungskraftmaschine durch eine Hilfselektromaschine gestartet wird. Somit kann die erste Elektromaschine geringer dimensioniert werden und muss kein Drehmoment für den Startvorgang vorhalten. Ferner ist ein Schnellstart möglich, indem die Hilfselektromaschine mit zugehörigen Getriebeteilen einen entsprechenden Drehimpuls aufbaut, um diesen dann für den Start auszunutzen. Somit wird ausschließlich die Hilfselektromaschine zum Starten der Verbrennungskraftmaschine in einem komplexen System verwandt. Dementsprechend muss die Hilfselektromaschine die Leistung zum Starten der Verbrennungskraftmaschine alleine bereitstellen und entsprechend dimensioniert sein.

Aus der deutschen Offenlegungsschrift DE 10 2007 061 895 A1 ist ein Hybridfahrzeug bekannt, bei dem eine Verbrennungskraftmaschine durch einen Anlasser gestartet wird. Somit kann die Hauptelektromaschine mit geringer Leistung ausgelegt werden, da sie kein Drehmoment für den Startvorgang vorhalten muss. Durch eine Freilaufkupplung wird sichergestellt, dass während des normalen Fahrbetriebs keine weitere Antriebsenergie durch die Hauptelektromaschine auf den Motor oder Anlasser ausgeübt wird. Somit wird ausschließlich der Anlasser zum Starten der Verbrennungskraftmaschine verwandt, der aufgrund der häufigen Starts und Wiederstarts der Verbrennungskraftmaschine entsprechend stark belastet wird.

Aus der deutschen Offenlegungsschrift DE 198 38 853 A1 ist ein Hybridfahrzeug bekannt, bei dem eine Verbrennungskraftmaschine durch einen Anlasser gestartet wird. Ferner unterstützt ein Elektromotor den Startvorgang. Der Elektromotor wird mit größerer Leistung ausgelegt, um einen Radmomenteinbruch zu verringern und um den Startvorgang der Verbrennungskraftmaschine zu unterstützen.

Die Offenlegungsschriften DE 10 2013 016 756 A1, DE 10 2012 211 920 A1 und DE 10 2014 200 253 A1 sind weitere Beispiele des Stands der Technik.

Verfolgt man nun einen Ansatz, bei dem die Verbrennungskraftmaschine nur über den Elektroantriebsmotor startet, so muss dessen Leistung noch größer ausgelegt sein, um den Radmomenteinbruch beim Starten der Verbrennungskraftmaschine soweit zu verringern, dass keine Zugkraftunterbrechung spürbar ist.

Für einen komfortablen Wiederstart des Verbrennungsmotors aus dem (rein) elektrischen Fahrbetrieb heraus, muss der elektrische Antrieb ein Summendrehmoment bereitstellen, das gleichzeitig das elektrische Antriebsmoment für die Fahranforderung, sowie das erforderliche Drehmoment für den Wiederstart der Verbrennungskraftmaschine bereitstellt. Der elektrische Antrieb muss damit ein maximales Drehmoment darstellen können, das über das verfügbare Fahrdrehmoment hinausgeht. Diese Wiederstartreserve für die Verbrennungskraftmaschine bedingt eine "überdimensionierte" Auslegung des elektrischen Antriebs mit meist erhöhtem Bauraumbedarf, höherem Gewicht, Kostennachteilen und einem reduzierten Wirkungsgrad. Aufgabe der Erfindung ist es, eine einfache, verbesserte Startmöglichkeit für eine Verbrennungskraftmaschine eines Hybridfahrzeugs zu schaffen.

Diese Aufgabe wird durch das erfindungsgemäße Verfahren zum Starten einer Verbrennungskraftmaschine eines Hybridfahrzeuges nach Anspruch 1 und ein Hybridfahrzeug nach Anspruch 10 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Im Folgenden wird ein erfindungsgemäßes Verfahren zum Starten einer Verbrennungskraftmaschine eines Hybridfahrzeuges beschrieben.

Das Hybridfahrzeug ist auf (mindestens) einer Antriebsachse z.B. als Einwellen-Parallelhybrid, wie oben beschrieben, ausgestaltet. Das Hybridfahrzeug weist einen ersten Triebstrang auf, der eine Verbrennungskraftmaschine, eine erste Elektromaschine und ein Getriebe mit einer Fahrkupplung umfasst, die als Anfahrelement dient und auf eine erste Antriebsachse wirkt.

Die erste Elektromaschine ist über eine Trennkupplung an die Verbrennungskraftmaschine koppelbar. Die Trennkupplung kann z.B. als Reibkupplung ausgestaltet sein.

Das Getriebe kann z.B. als Doppelkupplungsgetriebe mit einer Doppelkupplung, im Folgenden auch Fahrkupplung genannt, als Anfahrelement ausgestaltet sein. Alternativ kann das Getriebe als Stufenautomat mit hydrodynamischem Drehmomentwandler/Überbrückungskupplung als Anfahrelement ausgestaltet sein. Alternativ kann das Getriebe auch als automatisiertes Schaltgetriebe mit einfacher, automatisierter Kupplung als Anfahrelement ausgestaltet sein.

Die erste Elektromaschine und/oder die Verbrennungskraftmaschine stellen über den ersten Triebstrang ein Antriebsmoment bereit, das über das Anfahrelement, z.B. die Fahrkupplung, und das Getriebe, z.B. ein Doppelkupplungsgetriebe, auf wenigstens ein Antriebsrad bzw. eine Antriebsachse und insbesondere auf eine Vorderachse - alternativ auch auf eine Hinterachse - übertragen wird.

Die zweite Elektromaschine stellt (im Betrieb) über den zweiten Triebstrang ein Antriebsmoment bereit, dass entsprechend auf die andere Antriebsachse, insbesondere auf eine Hinterachse, übertragen wird.

Es gibt auch Ausführungen, bei denen beide Triebstränge gemeinsam auf eine Achse wirken oder solche, bei denen beide Triebstränge auf alle Achsen wirken.

Das Hybridfahrzeug befindet sich in einem fahrenden Zustand, wobei es vorwärts oder rückwärts fahren kann. Die Verbrennungskraftmaschine ist typischerweise zu diesem Zeitpunkt ausgeschaltet und liefert kein Antriebskomment. Bei manchen Ausführungsbeispielen ist die Verbrennungskraftmaschine noch warm, sodass es sich bei dem Startvorgang der Verbrennungskraftmaschine um einen Warmstart handeln kann. Bei anderen Ausführungsbeispielen kann es sich auch um einen Kaltstart der Verbrennungskraftmaschine handeln.

Ein zweiter Triebstrang ist mit einer zweiten Elektromaschine versehen, die gegebenenfalls über ein Getriebe wenigstens ein Rad einer weiteren Antriebsachse antreibt. Die zweite Elektromaschine kann auch über eine weitere Trennkupplung lösbar mit der zweiten Antriebsachse koppelbar sein.

Ab einem Vorbereitungszeitpunkt, der bspw. von einer Steuerung des Hybridfahrzeugs, die auch Hybridkoordinator oder Hybridsteuerung genannt wird, bestimmt werden kann, wird der Startvorgang der Verbrennungskraftmaschine eingeleitet.

Bis zu diesem Zeitpunkt befindet sich das Fahrzeug im Betriebsmodus "elektrisches Fahren", bei dem die erste Elektromaschine z.B. die Vorderachse antreibt. Dabei ist die Fahrkupplung im sogenannten mikroschlupfgeregelten Zustand, in dem leichte Schwankungen des Fahrerwunschmoments unmittelbar nachgeführt werden. Das Fahrzeug fährt mit konstanter Geschwindigkeit, d.h. Raddrehzahl und Radmoment sind konstant, die Trennkupplung zum Verbrennungsmotor ist geöffnet und der Verbrennungsmotor selbst steht still.

Die zweite Elektromaschine, die auf die zweite Antriebsachse wirkt, bspw. auf die Hinterachse, dreht leer mit dem Getriebe mit, stellt aber kein Drehmoment zum Antrieb des Fahrzeugs bereit. Sie kann alternativ auch über eine Trennkupplung vollständig vom Getriebe bzw. der zweiten Antriebsachse abgekoppelt sein.

Zu diesem Vorbereitungszeitpunkt wird ein Wiederstart der Verbrennungskraftmaschine angefordert, gleichzeitig wird gegebenenfalls ein Warmstart bzw. Kaltstartkriterium (z.B. über die Betriebstemperatur) bestimmt. Dabei wird zunächst das elektrische Antriebsdrehmoment und damit auch die Kupplungskapazität der ersten Elektromaschine auf der Antriebsachse (z.B. die Vorderachse) sukzessive reduziert, bis die erste Elektromaschine eine Drehmomentreserve aufgebaut hat. Diese Drehmomentreduktion an der Vorderachse wird gleichzeitig durch eine entsprechende Anhebung des Drehmoments der zweiten, auf die Hinterachse wirkenden Elektromaschine kompensiert, so dass insgesamt das Antriebsdrehmoment konstant bleibt und sich der Fahrzustand des Fahrzeugs nicht spürbar verändert.

Der eigentliche Start bzw. der Wiederstart der Verbrennungskraftmaschine erfolgt dann über die erste Elektromaschine, die dann in der nachfolgend beschriebenen Weise ihre Drehmomentreserve (Wiederstartreserve) zum Starten der Verbrennungskraftmaschine zur Verfügung stellt. Das Wiederstartverfahren läuft dann bspw. folgendermaßen ab.

Durch das Betreiben der ersten Elektromaschine kann ein Drehmoment auf die Verbrennungskraftmaschine über das Koppelelement ausgeübt werden und dadurch die Drehzahl der Verbrennungskraftmaschine erhöht werden bis ein Startkriterium der Verbrennungsmaschine erreicht ist, sodass die Verbrennungskraftmaschine entweder ab einem bestimmten Zeitpunkt den Startvorgang selbst unterstützen kann (sogenannter "Schlupfstart") oder über einen aufgebauten Drehimpuls der ersten Elektromaschine und schnelles Ankoppeln schnell gestartet wird (sog. "Impulsstart").

Die Verbrennungskraftmaschine erhält ab einem bestimmten Zeitpunkt zum Beispiel Kraftstoff aus einer Einspritzung und stellt folglich ein Drehmoment bereit, welches sie zum Erhöhen der eigenen Drehzahl verwendet. Die erste Elektromaschine kann dabei über die schlupfende Trennkupplung so mit der Verbrennungskraftmaschine gekoppelt sein, dass ein variabler Anteil des elektrischen Drehmoments zur Drehzahlerhöhung der Verbrennungskraftmaschine verwendet wird. Insbesondere kann die Trennkupplung geöffnet werden, so dass in dieser Phase das von der Verbrennungskraftmaschine selbst erzeugte Drehmoment ausschließlich zur Steigerung der eigenen Drehzahl verwendet werden.

Sobald die Verbrennungskraftmaschine in Betrieb ist, kann die Trennkupplung wenigstens teilweise geschlossen werden. Dabei kann die erste Elektromaschine weiterhin im Wesentlichen das Antriebsmoment über die Fahrkupplung bereitstellen und gleichzeitig ein Drehmoment über die Trennkupplung auf die Verbrennungskraftmaschine ausüben.

Das Schließen der Trennkupplung kann "schnell" oder "langsam" erfolgen. Je "schneller" die Trennkupplung geschlossen wird, desto höher ist der Drehimpulsanteil der von der ersten Elektromaschine auf die Verbrennungskraftmaschine übertragen wird ("Impulsstart") und je "langsamer" die Trennkupplung geschlossen wird, desto höher ist der Drehmomentanteil der allmählich von der ersten Elektromaschine auf die Verbrennungskraftmaschine ("Schleppstart") übertragen wird.

Dadurch, dass die zweite Elektromaschine den zum Start der Verbrennungskraftmaschine erforderlichen Betrag des Antriebsmoments übernimmt, also insgesamt weiterhin das gleiche Antriebsmoment bereitsteht, bemerkt bspw. ein Fahrer des Hybridfahrzeugs den Startvorgang der Verbrennungskraftmaschine nicht, da es keine oder nahezu keine Veränderung des anliegenden Antriebsmoments gibt. Damit wird eine Schnellstartmöglichkeit für die Verbrennungskraftmaschine geschaffen, bei der eine merkbare Reduktion des Antriebsmoments am Antriebsrad wenigstens teilweise vermieden wird, ohne dass Zusatzaggregate zum Start der Verbrennungskraftmaschine erforderlich wären.

Damit die erste Elektromaschine gleichzeitig das Antriebsmoment und ein Drehmoment zur Unterstützung des Startvorgangs der Verbrennungskraftmaschine bereitstellen kann, ist vorgesehen, vor dem eigentlichen Einleiten des Startvorgangs die erste Elektromaschine zu entlasten, indem ein Teil des Antriebsmoment über die zweite Elektromaschine über den anderen Antriebsstrang bereitgestellt wird. Dementsprechend kann auf eine Hilfselektromaschine, die den Startvorgang der Verbrennungskraftmaschine durchführt, verzichtet werden. Dadurch, dass die Verbrennungskraftmaschine selbst ab einer bestimmten Drehzahl ein Drehmoment bereitstellt, kann das von der ersten Elektromaschine für den Startvorgang der Verbrennungskraftmaschine bereitzustellende Drehmoment von da an verringert werden.

Bei manchen Ausführungsbeispielen ist folglich die Teilnahme eines konventionellen elektrischen Ritzelstarters, d.h. eines konventionellen Anlassers der die Verbrennungskraftmaschinen alleine ohne Unterstützung der ersten Elektromaschine starten kann, für den Startvorgang nicht erforderlich und bei manchen Ausführungsbeispielen kann sogar ganz auf ihn verzichtet werden.

Bei manchen Ausführungsbeispielen wird eine im Mikroschlupf betriebene Fahrkupplung bzw. ein im Mikroschlupf betriebenes Anfahrelement ab dem ersten Zeitpunkt von einem Mikroschlupfbetrieb in einen Makroschlupfbetrieb gesetzt. In dem Mikroschlupfbetrieb ist nur eine geringe Abweichung zwischen der Drehzahl des Doppelkupplungsgetriebes und der der ersten Elektromaschine (bzw. des Verbrennungskraftmotors) zulässig, wodurch die Motormomente radmomentenbestimmend werden, während im Makroschlupfbetrieb dieser Unterschied größer sein kann (hier ist das Kupplungsmoment radmomentenbestimmend). Dies wird bei manchen Ausführungsbeispielen ausgenutzt, um die Drehzahl der ersten Elektromaschine zu erhöhen und damit das Antriebsmoment und gleichzeitig das den Startvorgang unterstützende Drehmoment bereitstellen zu können. Im Mikroschlupfbetrieb ist zum Beispiel bei Ottomotoren und im elektrischen Betrieb eine Drehzahldifferenz von 6 Umdrehungen pro Minute für Zug- und Schubzustand üblich, ohne dass die vorliegende Erfindung darauf beschränkt sein soll. Im Mikroschlupf kann die Fahrkupplung so betrieben werden, dass sie nach außen wie eine starre Welle wirkt. Im Makroschlupfbetrieb gibt es bei manchen Ausführungsbeispielen keine Einschränkung der Differenzdrehzahl und, wie erwähnt, ist die Fahrkupplung das momentenbestimmende Glied.

Bei manchen Ausführungsbeispielen wird entsprechend bereits ab dem ersten Zeitpunkt die Drehzahl der ersten Elektromaschine erhöht. Bei diesen Ausführungsbeispielen kann, wie erwähnt, auch das Anfahrelement, z.B. die Fahrkupplung ab dem ersten Zeitpunkt in den Makroschlupfbetrieb gesetzt sein, damit die Drehzahl der ersten Elektromaschine erhöht werden kann, ohne das Antriebsmoment, das auf das wenigstens eine Antriebsrad des Hybridfahrzeugs wirkt, zu erhöhen. Durch die Erhöhung der Drehzahl ab diesem Zeitpunkt kann auch bei manchen Ausführungsbeispielen der überschüssige Drehimpuls erhöht werden, der durch schnelles Schließen der ersten Trennkupplung auf die Verbrennungskraftmaschine übertragen werden kann, wie oben bereits ausgeführt wurde.

Bei manchen Ausführungsbeispielen wird entsprechend die Trennkupplung zu dem zweiten Zeitpunkt derart geschlossen, dass ein Drehimpuls der ersten Elektromaschine auf die Verbrennungskraftmaschine übertragen wird. Der Drehimpuls entsteht bei manchen Ausführungsbeispielen dadurch, dass die Fahrkupplung von dem oben genannten Mikroschlupfbetrieb in einen Makroschlupfbetrieb geschaltet wird und dann die Drehzahl der ersten Elektromaschine über die Synchrondrehzahl hinaus angehoben wird.

Die erste Trennkupplung kann bei manchen Ausführungsbeispielen auch langsam geschlossen werden, sodass ein entsprechender Schlupf über längere Zeit vorhanden ist, und folglich Drehmoment von der ersten Elektromaschine in die Verbrennungskraftmaschine übertragen wird. Bei diesen Ausführungsbeispielen gibt es folglich zu/ab diesem dritten Zeitpunkt vier Drehmomentquellen, nämlich ein erstes Drehmoment, das von der zweiten Elektromaschine bereitgestellt wird, ein zweites Drehmoment, das von der Verbrennungskraftmaschine selbst durch den eingeleiteten Startvorgang bereitgestellt wird, ein drittes Drehmoment, das von der erste Elektromaschine bereitgestellt wird und ein viertes Drehmoment, das aus dem überschüssigen Drehimpuls der erste Elektromaschine bereitgestellt wird.

Ab einem dritten Zeitpunkt kann bei manchen Ausführungsbeispielen auch die Trennkupplung vollständig geschlossen werden, sodass die Verbrennungskraftmaschine und die erste Elektromaschine vollständig aneinander gekoppelt sind und folglich eine synchrone Drehzahl haben. Dadurch kann die Verbrennungskraftmaschine auch über den ersten Triebstrang wirken. Diese synchrone Drehzahl kann noch oberhalb der Synchrondrehzahl liegen. Um die Drehzahl der Verbrennungskraftmaschine und der ersten Elektromaschine an die Synchrondrehzahl anzupassen, kann die Fahrkupplung kontinuierlich von einem Makroschlupfbetrieb in einen Mikroschlupfbetrieb überführt werden.

Ab einem vierten Zeitpunkt kann bei manchen Ausführungsbeispielen das von der ersten Elektromaschine bereitgestellte Antriebsmoment verringert werden und die Verbrennungskraftmaschine steigert ihre Drehmomentabgabe, sodass ab einem fünften Zeitpunkt das Antriebsmoment vollständig durch die Verbrennungskraftmaschine bereitgestellt werden kann. Dies geschieht bspw. dadurch, dass die elektrische Leistung der ersten Elektromaschine verringert wird, während die Leistung der Verbrennungskraftmaschine entsprechend gesteigert wird. Dadurch kann die Verbrennungskraftmaschine allmählich die Aufgabe übernehmen, das Antriebsmoment anteilig und schlussendlich vollständig bereitzustellen.

Bei manchen Ausführungsbeispielen umfasst das Verfahren folglich vier Phasen, eine erste Phase, in der das Hybridfahrzeug rein elektrisch fährt und eine (Wieder)startreserve an der ersten Elektromaschine aufgebaut wird, indem die zweite Elektromaschine einen Teil des Antriebsmoments liefert, eine zweite Phase, in der die Drehzahl der Verbrennungskraftmaschine zum (Wieder-)Starten mittels der verfügbaren Wiederstartreserve der ersten Elektromaschine angehoben wird, eine dritte Phase in der das Drehmoment der ersten Elektromaschine verringert und das der Verbrennungskraftmaschine entsprechend erhöht wird, auch Momentenüberblendung genannt, und eine vierte Phase, in der das Hybridfahrzeug hybridisch mit Unterstützung der Verbrennungskraftmaschine fährt.

In der zweiten Phase, in der die Drehzahl der Verbrennungskraftmaschine angehoben wird, können, wie oben beschrieben, bei manchen Ausführungsbeispielen die vier oben genannten Drehmomentquellen ausgenutzt werden.

Bei manchen Ausführungsbeispielen kann ein Startmanagement der Verbrennungskraftmaschine entsprechend durch Ausnutzen der oben genannten vier Drehmomentquellen je nach einer gewünschten Anforderung dahingehend ausgestaltet werden, ob z.B. ein dynamischer, schneller Start der Verbrennungskraftmaschine oder ein möglichst energieeffizienter Start der Verbrennungskraftmaschine gewünscht ist. Dazu müssen nur, wie oben ausgeführt, die verschiedenen Drehmomentquellen und Verfahrensschritte je nach Anforderung an den entsprechenden Zeitpunkten miteinander kombiniert werden, wobei, wie erwähnt, die Reihenfolge der Zeitpunkte auch vertauscht werden kann.

Es gibt Ausführungsbeispiele bei denen die zweite Elektromaschine derart betrieben wird, dass deren über den zweiten Triebstrang wirkendes Drehmoment entsprechend dem Drehmoment, das die Verbrennungskraftmaschine und/oder die erste Elektromaschine auf die erste Antriebsachse ausübt, angepasst wird. So kann der Startvorgang der Verbrennungskraftmaschine durch eine entsprechende, dynamische Antriebs-/Lastverteilung zwischen erster und zweiter Elektromaschine vollständig kompensiert und für den Fahrer "neutralisiert" werden. Der Wiederstart kann auf diese Weise sogar während Beschleunigungsvorgängen durchgeführt werden, wenn die zweite Elektromaschine hinreichend großes Drehmomentpotential aufweist.

Manche Ausführungsbeispiele betreffen ein Hybridfahrzeug mit einem ersten Triebstrang und zweiten Triebstrang, wie oben ausgeführt. Der erste Triebstrang umfasst eine Verbrennungskraftmaschine, eine erste Elektromaschine, ein Getriebe mit Anfahrelement, wie oben im Detail erläutert, und wirkt auf eine oder mehrere Antriebsachsen. Über den zweiten Triebstrang wirkt eine zweite Elektromaschine, die mit wenigstens einer der Antriebsachsen koppelbar ist (d.h. dauerhaft gekoppelt oder auch über eine Getriebe, ggf. mit zusätzlichem Anfahrelement, gekoppelt).

Die erste Elektromaschine ist über eine (erste) Trennkupplung an die Verbrennungskraftmaschine koppelbar.

Die erste Elektromaschine stellt ein Antriebsmoment bereit, wie oben ausgeführt. Die Steuerung ist dazu eingerichtet, das oben beschriebene Verfahren wenigstens teilweise auszuführen.

Eine vorgesehene Steuerung kann eine Hybridsteuerung, auch Hybridkoordinator genannt, sein und/oder andere Steuerungen oder Steuerungselemente umfassen, wie z.B. ein Steuerungselement für die Motorsteuerung (Einspritzung), Steuerelemente zur Steuerung der Fahrkupplung, Trennkupplungen, des Getriebes und Anfahrelements, etc. Da die Steuerung der einzelnen Komponenten eines Hybridfahrzeugs grundsätzlich bekannt ist, ist eine detaillierte Beschreibung der Steuerung und ihrer Komponenten nicht erforderlich.

Ausführungsbeispiele der Erfindung werden nun beispielhaft und unter Bezugnahme auf die beigefügte Zeichnung beschrieben, in der:
Fig. 1 schematisch ein Ausführungsbeispiel eines Hybridfahrzeugs veranschaulicht;
Fig. 2 schematisch eine Steuerung für ein Hybridfahrzeug zeigt;
Fig. 3 ein Ausführungsbeispiel eines ersten Bestandteils eines Verfahrens zum Wiederstarten einer Verbrennungskraftmaschine zeigt;
Fig. 4 ein Ausführungsbeispiel eines zweiten Bestandteils eines Verfahrens zum Wiederstarten einer Verbrennungskraftmaschine zeigt;

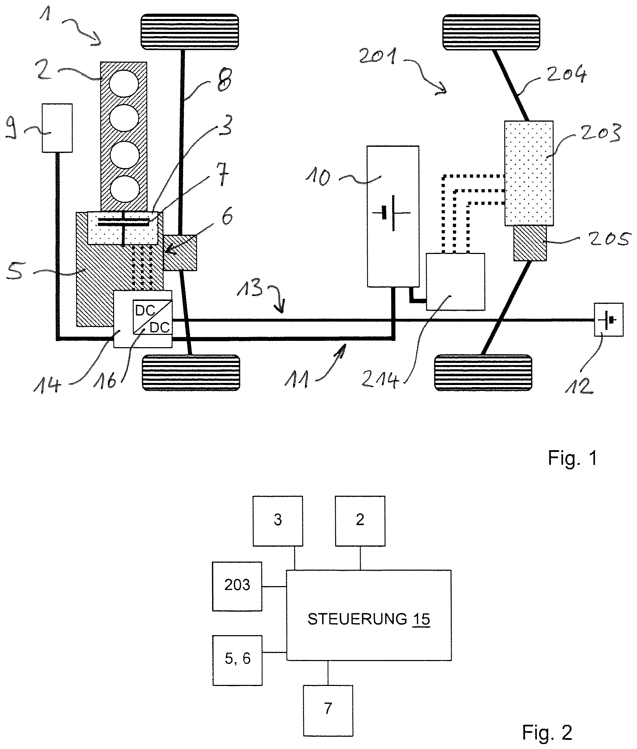

Ein Ausführungsbeispiel eines Hybridfahrzeugs mit einem ersten und zweiten Triebstrang 1, 201 ist in Fig. 1 veranschaulicht. Bei dem vorliegenden Ausführungsbeispiel handelt es sich um einen sogenannten Parallelhybrid, bei dem auf einer Getriebeeingangswelle sowohl eine Verbrennungskraftmaschine 2 als auch eine erste Elektromaschine 3 angeordnet sind.

Die erste Elektromaschine 3 ist über einen Wechselrichte 14 an eine als elektrischer Energiespeicher dienende Hochvoltbatterie 10 angebunden.

Die Getriebeeingangswelle mündet in ein automatisches Doppelkupplungsgetriebe 5 mit Fahrkupplungen 6, die die Verbrennungskraftmaschine 2 und die erste Elektromaschine 3 an wenigstens ein Antriebsrad (in der Regel an beide Räder) der Vorderachse 8 koppeln, sodass ein von der Verbrennungskraftmaschine 2 und/oder ersten Elektromaschine 3 erzeugtes Antriebsmoment entsprechend auf das wenigstens eine Antriebsrad überragen wird. Die Verbrennungskraftmaschine 2 und die erste Elektromaschine 3 sind über eine (erste) Trennkupplung 7 miteinander koppelbar.

Außerdem ist als zweiter Antriebsstrang 201 eine zweite Elektromaschine 203 vorgesehen, welche über ein Zwischengetriebe 205 auf wenigstens ein Rad (oder auch beide Räder) der Hinterachse 204 wirkt, die hier die zweite Antriebsachse bildet. Die zweite Elektromaschine 203 wird wie die erste Elektromaschine 3 aus der Hochvoltbatterie 10 über einen Wechselrichter 214 gespeist. Die zweite Elektromaschine 203 kann so betrieben werden, dass sie kein Drehmoment (s. Drehmomentverlauft EMH) an die zweite Antriebsachse 204 liefert und lediglich mit einer bestimmten Drehzahl leer mitläuft, die durch die Raddrehzahl und ggf. das zwischengeschaltete Getriebe 205 bestimmt wird.

Die zweite Elektromaschine 203 ist bspw. als asynchrone Maschine ausgeführt, die während dieses Betriebszustandes elektrisch enterregt schaltbar ist, um Schleppverluste der Maschine zu vermeiden. Alternativ oder zusätzlich kann auch eine Trennkupplung zwischen der zweiten Elektromaschine 203 und der zweiten Antriebsachse 204 bzw. zwischen dem Getriebe 205 und der zweiten Antriebsachse 204 vorgesehen sein, um die Schleppverluste noch weiter zu verringern.

Ferner zeigt Fig. 1 beispielhaft eine elektrische Klima-Kompressor-Einheit 9, die ebenfalls zum ersten Triebstrang 1 gehört.

Eine Hochvolt-Batterie 10 ist über eine Hochvolt-Bordnetz 11 mit der ersten und zweiten Elektromaschine 3, 203 und der Klima-Kompressor-Einheit 9 elektrisch gekoppelt. Außerdem ist eine 12 V-Batterie 12 über ein 12 V-Bordnetz 13 mit nicht weiter dargestellten Verbrauchern gekoppelt. Zum Umwandeln der Spannungen des Hochvoltnetzes 11 auf die Spannung des 12 V-Bordnetzes 13 ist ein Gleichspannungswandler (DC-DC-Wandler) 16 zwischen dem 12 V-Bordnetz 13 und dem Hochvolt-Bordnetz 11 gekoppelt.

Es ist auch möglich für die erste und zweite Elektromaschine 3, 203 jeweils eine eigene Spannungsversorgung bereitzustellen.

Fig. 2 veranschaulicht schematisch eine Steuerung 15, die zur Steuerung des ersten und zweiten Triebstranges 1, 201 des Hybridfahrzeugs ausgelegt ist und die dazu eingerichtet ist, die hier beschriebenen Verfahren wenigstens teilweise auszuführen.

Die Steuerung 15 ist mit den einzelnen anzusteuernden Komponenten des Triebstranges 1 und 201 verbunden, nämlich mit der Verbrennungskraftmaschine 2, der ersten Elektromaschine 3, der zweiten Elektromaschine 203, dem Doppelkupplungsgetriebe 5 mit Fahrkupplungen 6 und mit der (ersten) Trennkupplung 7. Diese Verbindung zwischen der Steuerung 15 und den einzelnen anzusteuernden Komponenten der Triebstränge 1 und 201 ist hier nur logisch zu verstehen und nicht als tatsächliche, physikalische Verbindung.

Ähnliches gilt für die Steuerung 15 selbst, die in den Ausführungsbeispielen eine Vielzahl von Steuerungen bzw. Steuerelementen umfassen kann, um die einzelnen hierin beschriebenen Steuerungsaufgaben und Verfahrensschritte umzusetzen.

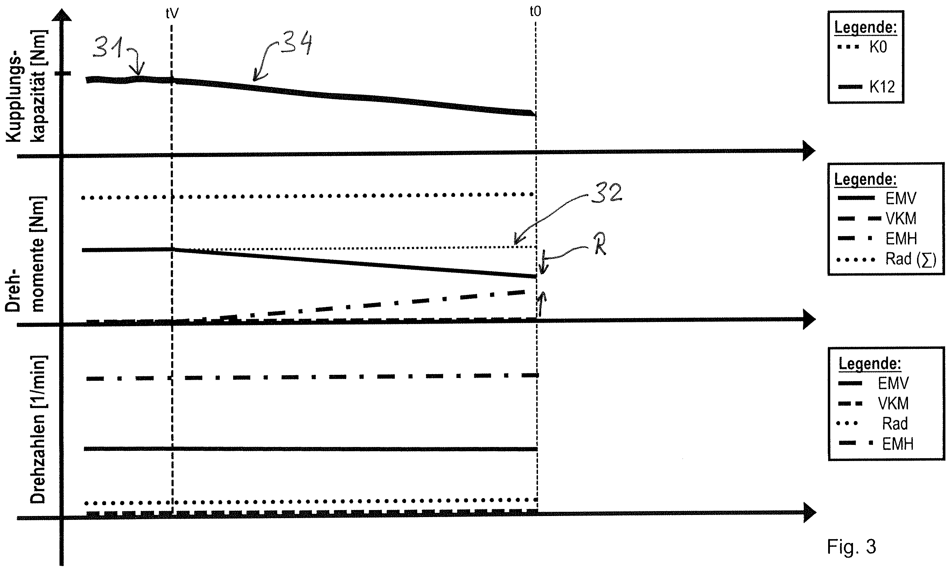

Fig. 3 veranschaulicht nun einen ersten Verfahrensabschnitt eines Ausführungsbeispiel eines Verfahrens zum Starten einer Verbrennungskraftmaschine eines Hybridfahrzeuges mit ersten und zweiten Elektromaschine 3, 103.

Fig. 3 zeigt auf der Abszisse die Zeit und auf der Ordinate im untersten Drittel Drehzahlverläufe "EMV" für die erste (vordere) Elektromaschine 3, "EMH" für die zweite (hintere) Elektromaschine 203, "VKM" für die Verbrennungskraftmaschine 2 und "Rad" für das wenigstes eine angetriebene Rad und/oder die mitlaufenden Räder. Im mittleren Drittel zeigt Fig. 3 entsprechend die Drehmomentverläufe "EMV" für die Erste Elektromaschine 3, "EMH" für die zweite Elektromaschine 203, den Fahrmomentverlauf "VKM" der Verbrennungskraftmaschine 2 und den kombinierten Antriebsmomentenverlauf "Rad" an wenigstens einem Rad der ersten Achse (Vorderachse 8) und/oder der zweiten Achse (Hinterachse 204), welcher konstant ist. Das oberste Drittel der Fig. 1 zeigt den Kupplungskapazitätsverlauf "K12" für die Fahrkupplung 6.

Das Hybridfahrzeug befindet sich bei dem hier beschriebenen Szenario zunächst in einem Betriebszustand reinen elektrischen Fahrens, der zunächst bis zum Zeitpunkt tv vorliegt. Im vorliegenden Fall handelt es sich um eine Konstantfahrgeschwindigkeit, d.h. Raddrehzahl und Radmoment sind konstant, wie sich der Fig. 3 entnehmen lässt. Bis zum Zeitpunkt t0 befindet sich die Fahrkupplung 6 in einem mikroschlupfgeregelten Zustand und führt leichte Schwankungen im Fahrerwunschmoment unmittelbar nach (siehe Pfeil 21 des Kupplungskapazitätsverlaufes K12). Aufgrund der konstanten Fahrgeschwindigkeit sind das Drehmoment und die Drehzahl der Ersten Elektromaschine 3 ebenfalls konstant, wie aus dem Drehmomentverlauf EMV bzw. dem Drehzahlverlauf EMV ersichtlich ist. Die Verbrennungskraftmaschine 2 ist bis zum Zeitpunkt t0 ausgeschaltet und hat folglich ein Drehmoment und eine Drehzahl von Null (siehe Drehzahlverlauf VKM).

Stellt die Steuerung 15 fest, dass die Verbrennungskraftmaschine 2 benötigt wird, so initiiert sie das im Folgenden beschriebene Startverfahren für die Verbrennungskraftmaschine 2.

Das Startverfahren beginnt zum Vorbereitungszeitpunkt tv mit dem von der Steuerung 15 gegebenen Startkommando. Vom Zeitpunkt tv an wird die Kupplungskapazität K12 der Fahrkupplung 6 mikroschlupfgeregelt herabgesetzt (s. Pfeil 34), gleichzeitig wird das Drehmoment der ersten Elektromaschine 3 um einen Betrag R herabgesetzt, dessen Höhe von der Steuerung 15 gemäß einem Kaltstart- bzw. Warmstartkriterium festgelegt wird. Gleichzeitig wird das Antriebsdrehmoment der zweiten Elektromaschine 203 entsprechend erhöht, so dass das resultierende Gesamtdrehmoment an den Rädern konstant bleibt und keine spürbare Zustandsänderung des Fahrbetriebs eintritt.

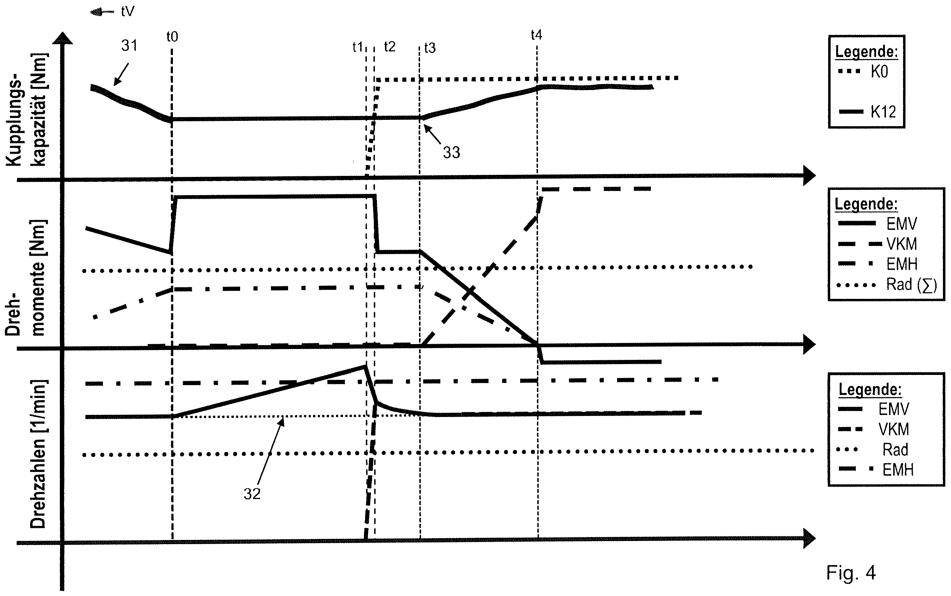

Diese so gewonnene Wiederstartreserve R (freies Drehmomentpotential des ersten Elektromotors 3) steht dann für den eigentlichen Start -/Wiederstartvorgang zur Verfügung, der nachfolgend anhand der Fig. 4 beschrieben wird.

Von t0 an wird die Drehzahl der ersten Elektromaschine 3 unter Nutzung der Wiederstartreserve R (freies Drehmomentpotential) erhöht und ein Drehimpuls wird aufgebaut und parallel dazu wird ab dem Zeitpunkt t0 der Zustand der Fahrkupplung 6 in einen makroschlupf-gesteuerten Zustand überführt.. Das heißt die Fahrkupplung 6 wird von einem Mikroschlupfbetrieb mit nur wenigen Umdrehungen Differenzdrehzahl in einen Makroschlupfbetrieb mit entsprechend höherer Differenzdrehzahl gesetzt, wobei das Kupplungsmoment idealerweise wie das Fahrerwunschmoment gewählt wird (hier konstant dargestellt). Dementsprechend liegt ab dem Zeitpunkt t0 die Drehzahl der ersten Elektromaschine 3 oberhalb der Synchrondrehzahl des Doppelkupplungsgetriebes 5 (siehe Pfeil 32, der auf eine gestrichelte Linie zeigt, die die Synchrondrehzahl repräsentiert).

Zu einem Zeitpunkt t1 wird die Trennkupplung 7 schnell geschlossen. Dadurch wird der in der Trägheit der ersten Elektromaschine 3 gespeicherte Drehimpuls auf die Verbrennungskraftmaschine 2 übertragen, um die Verbrennungskraftmaschine 2 zu beschleunigen. Das Drehmoment der ersten Elektromaschine 3 wird zunächst weiter beibehalten und zur Anhebung der Drehzahl der Verbrennungskraftmaschine 2 genutzt. In dem kurzen Intervall zwischen dem Zeitpunkt t1 und dem kurz darauffolgenden Zeitpunkt t2 wird die Trennkupplung 7 bis zum Zeitpunkt t2 vollständig geschlossen. In diesem Zeitintervall wird die Verbrennungskraftmaschine 2 durch den Übertrag von Drehimpuls von der ersten Elektromaschine 3 beschleunigt (in einem Zeitraum von maximal 20 bis 30ms), wie sich auch aus der steil steigenden Drehzahl der Verbrennungskraftmaschine 2 aus dem Drehzahlverlauf VKM aus Fig. 4 ergibt.

Ab einem Zeitpunkt t2 sind die Drehzahlen der Verbrennungskraftmaschine 2 und der erste Elektromaschine 3 synchronisiert und die Trennkupplung 7 ist vollständig geschlossen. Dies ist aus den zugehörigen Drehzahlverläufen EMV und VKM und dem zugehörigen Kupplungskapazitätsverlauf K0 ersichtlich. Bis zum Zeitpunkt t3 schließt sich ein Aufkoppelvorgang an, der die gemeinsame Drehzahl von erster Elektromaschine 3 und Verbrennungskraftmaschine 2 auf die Synchrondrehzahl (siehe Pfeil 32) des Doppelkupplungsgetriebes 5 überführt.

Ab dem Zeitpunkt t3 findet eine Momentenüberblendung statt, die das geforderte Fahrmoment oder Antriebsmoment von der erste Elektromaschine 3 (siehe Drehmomentverlauf EMV) in die Verbrennungskraftmaschine 2 (siehe Drehmomentverlauf VKM1) überführt. Außerdem wird die Fahrkupplung 6 wieder in den Mikroschlupfbetrieb gesetzt (siehe Pfeil 33).

In dem hier gezeigten Fall wird der elektrische Antrieb durch die erste Elektromaschine 3 nach Beendigung der Momentenüberblendung ab einem Zeitpunkt t4 in einen generatorischen Betrieb durch eine entsprechende Lastpunktanhebung überführt, sodass die Hochvolt-Batterie 10 durch die erste Elektromaschine 3 nachgeladen wird. Außerdem werden die Fahrkupplungen 6 wieder in den Mikroschlupfbetrieb gesetzt. Ab dem Zeitpunkt t4 übernimmt die Verbrennungskraftmaschine 2 das vor dem Umlastvorgang (zwischen tV und t0) von der ersten Elektromaschinen 3 aufgebrachte Antriebsmoment vollständig.

Im Zeitraum t0 bis t3 übernimmt die zweite Elektromaschine 203 den umgelasteten Drehmomentanteil der ersten Elektromaschine 3. So bleibt das Summenradmoment konstant. Im Zeitraum t3 bis t4 werden dann während der Aufblendung des Moments der Verbrennungskraftmaschine 2 die Momente der ersten und zweiten Elektromaschine 3 und 203 so abgesenkt, dass auch in diesem Zeitraum das Summenradmoment konstant bleibt. Die Drehzahl der zweiten Elektromaschine 203 bleibt während des gesamten Vorgangs konstant. Bei einer Ausführung, bei welcher die zweite Elektromaschine 203 mechanisch abkoppelbar angebunden ist, kann Sie vor oder nach dem Wiederstartvorgang (vor tV oder nach t4) auch vollständig stillgelegt werden.

Der Wiederstart der Verbrennungskraftmaschine ist zum Zeitpunkt t4 durch Beendigung der Momentenüberblendung von der ersten Elektromaschine 3 auf die Verbrennungskraftmaschine 2 abgeschlossen.

Ohne Beschränkung der Allgemeinheit sind die Verfahrensabschnitte der Fig. 3 und 4 für den sogenannten Zug-Betrieb eines Hybridfahrzeugs erklärt worden. Beim "Zug" wird das Hybridfahrzeug von der erste Elektromaschine 3, der zweiten Elektromaschine 103 und/oder der Verbrennungskraftmaschine 2 angetrieben, im Gegensatz zum Schub, bei dem das Hybridfahrzeug die erste Elektromaschine 3 und/oder der Verbrennungskraftmaschine 2 "antreibt" (Bergabfahrt oder dergleichen).

Zusammenfassend kommen folglich bei manchen Ausführungsbeispielen folgende Verfahrensschritte wenigstens teilweise vor. Außerdem ist bei manchen Ausführungsbeispielen die Reihenfolge der Zeitpunkte austauschbar, z.B. können Schritte zum Zeitpunkt t2 vor Schritten zum Zeitpunkt t3 liegen, etc., wie es oben bereits teilweise ausgeführt wurde.
- tv:: tv-a Vorbereitungkommando
tv-b Absenken Antriebsdrehmoments der ersten Elektromaschine am ersten Triebstrang und gleichzeitiges Aufbauen des Antriebsdrehmomentes der zweiten Elektromaschine am zweiten Triebstrang
- t0:: t0-a Startkommando
t0-b Aussetzen des Mikroschlupfbetriebs der Fahrkupplung (des Anfahrelements); oder Öffnen einer Wandlerüberbrückungskupplung; oder: Schlupfaufbau über der Fahrkupplung eines ASG (automatischen Schaltgetriebes)
t0-c Eintritt in vorbereitenden Schlupfaufbau
t0-d Darstellung Momenteneingriff Erste Elektromaschine, um eine Schlupfreserve für den Start der Verbrennungskraftmaschine bereitzustellen
- t1:: Momentenaufbau der ersten Trennkupplung (7) durch schnelles oder langsames Schließen
- t2:: Einspritzbeginn der Verbrennungskraftmaschine zur Darstellung Startmoment+Reibmoment
t2-a Rücknahme des Startmoments in der Verbrennungskraftmaschine
t2-b Rücknahme des Momenteneingriffs der Erste Elektromaschine (siehe t0-d)
t2-c Eintritt in Aufkopplungsphase, in der die gemeinsame Drehzahl der Erste Elektromaschine und der Verbrennungskraftmaschine an die Synchrondrehzahl angepasst wird
t2-d vollständiges Schließen der ersten Trennkupplung (7)
- t3:: t3-a Eintritt in Mikroschlupfbetrieb Fahrkupplung (6) (des Anfahrelements), oder: Schließen der Wandlerüberbrückung, oder: Schließen der Fahrkupplung beim ASG
t3-b Beginn Momentenüberblendung von Erste Elektromaschine auf Verbrennungskraftmaschine
- t4:: Ende Momentenüberblendung und Beginn der Betriebsart "Fahren VKM und EM"

### Bezugszeichenliste

- 1: erster Triebstrang
- 201: zweiter Triebstrang
- 2: Verbrennungskraftmaschine
- 3: erste Elektromaschine
- 203: zweite Elektromaschine
- 4: erste Antriebsachse
- 204: zweite Antriebsachse
- 5: Doppelkupplungsgetriebe
- 6: Fahrkupplung von 5 (Anfahrelement)
- 7: (erste) Trennkupplung (für Erste Elektromaschine)
- 8: Vorderachse
- 9: Klima-Kompressor-Einheit
- 10: Hochvolt-Batterie
- 11: Hochvolt-Bordnetz
- 12: 12 V-Starterbatterie
- 13: 12 V-Bordnetz
- 14: Wechselrichter
- 214: Wechselrichter
- 15: Steuerung
- 16: Gleichspannungswandler
- 31: Pfeil - Mikroschlupfbetrieb
- 32: Pfeil - Synchrondrehzahl
- 33: Pfeil - Mikroschlupfbetrieb
- 34: Pfeil - Absenken Kupplungskapazität im Mikroschlupfbetrieb
- K12: Kupplungskapazitätsverlauf der Fahrkupplung 6
- K0: Kupplungskapazitätsverlauf für Trennkupplung 7 (für Erste Elektromaschine)
- EMV: Drehmoment- bzw. Drehzahlverlauf der Erste Elektromaschine 3
- EMH: Drehmoment- bzw. Drehzahlverlauf der Zweite Elektromaschine 203
- VKM: Drehmoment bzw. Drehzahlverlauf der Verbrennungskraftmaschine 2
- Rad: Drehzahl- bzw. Drehmomentverlauf für wenigstens ein angetriebenes Rad

## Patentansprüche

1. Verfahren zum Starten einer Verbrennungskraftmaschine eines Hybridfahrzeuges mit einem ersten Triebstrang (1), der eine Verbrennungskraftmaschine (2), eine erste Elektromaschine (3), und ein Getriebe (5) umfasst, wobei die erste Elektromaschine (3) über eine Trennkupplung (7) an die Verbrennungskraftmaschine (2) und über eine Fahrkupplung (6), deren Schlupf regelbar ist, an eine erste und/oder zweite Antriebsachse koppelbar ist,
einem zweiten Triebstrang (201) mit einer zweiten Elektromaschine (203) die mit der ersten und/oder zweiten Antriebsachse koppelbar ist
wobei über die erste und zweite Elektromaschine (3, 203) jeweils ein Antriebsmoment bereitstellbar ist,
**gekennzeichnet durch** die Schritte:
ab einem ersten Zeitpunkt (tv) Betreiben der ersten Elektromaschine (3) und Betätigen der Fahrkupplung (6) derart, dass ein über den ersten Triebstrang (1) wirkendes Drehmoment der ersten Elektromaschine (3) um einen Drehmomentbetrag (R) reduziert wird, und Betreiben der zweiten Elektromaschine (203) derart, dass ein über den zweiten Triebstrang (201) wirkendes Drehmoment der zweiten Elektromaschine (203) entsprechend um den Drehmomentbetrag (R) erhöht wird,
ab einem zweiten Zeitpunkt (t0) Betreiben der Fahrkupplung (6) damit die Drehzahl der ersten Elektromaschine (3) unter Nutzung des Drehmomentbetrags (R) erhöht wird, und
ab einem dritten Zeitpunkt (t1) wenigstens teilweises Schließen der Trennkupplung (7) derart, dass dadurch die Drehzahl der Verbrennungskraftmaschine (2) bis zum Erreichen eines Startkriteriums erhöht wird, sodass die Verbrennungskraftmaschine (2) einen Startvorgang selbst unterstützt.

2. Verfahren nach Anspruch 1, wobei der Drehmomentbetrag (R) in Abhängigkeit von einem Betriebszustand der Verbrennungskraftmaschine (2) bestimmbar ist.

3. Verfahren nach Anspruch 2, wobei der Drehmomentbetrag (R) bei einem Kaltstartkriterium höher ist als bei einem Warmstartkriterium.

4. Verfahren nach einem der vorhergehenden Ansprüche, wobei die Trennkupplung (7) derart geschlossen wird, dass ein Drehimpuls der ersten Elektromaschine (3) auf die Verbrennungskraftmaschine (2) übertragen wird.

5. Verfahren nach einem der vorhergehenden Ansprüche, mit Betreiben der ersten Elektromaschine (3) ab einem fünften Zeitpunkt (t3) derart, dass die erste Elektromaschine (3) weiterhin einen Bestandteil des Antriebsmoments über das Fahrkupplung (6) bereitstellt und Betreiben der Verbrennungskraftmaschine (2) derart, dass sie ein Drehmoment über die Trennkupplung (7) auf die erste Elektromaschine (3) und damit über den ersten Triebstrang (1) ausübt.

6. Verfahren nach einem der vorhergehenden Ansprüche, wobei ab einem vierten Zeitpunkt (t2) die Drehzahlen der Verbrennungskraftmaschine (2) und der ersten Elektromaschine (3) synchron sind.

7. Verfahren nach Anspruch 6, wobei ab dem vierten Zeitpunkt (t2) die Fahrkupplung (6) kontinuierlich von einem Makroschlupfbetrieb in einen Mikroschlupfbetrieb gesetzt wird.

8. Verfahren nach einem der vorhergehenden Ansprüche, wobei ab einem fünften Zeitpunkt (t3) das von der ersten Elektromaschine (3) bereitgestellte Antriebsmoment verringert wird und ab einem sechsten Zeitpunkt (t4) durch die Verbrennungskraftmaschine (2) bereitgestellt wird.

9. Verfahren nach einem der Ansprüche 5 bis 8, mit Betreiben der zweiten Elektromaschine (203) derart, dass deren über den zweiten Triebstrang (201) wirkendes Drehmoment entsprechend dem Drehmoment, das die Verbrennungskraftmaschine (2) und/oder die erste Elektromaschine (3) über den ersten Triebstrang (1) ausübt, angepasst wird.

10. Hybridfahrzeug mit einem ersten Triebstrang (1), der eine Verbrennungskraftmaschine (2), eine erste Elektromaschine (3) und ein Getriebe (5) mit einem Fahrkupplung (6), deren Schlupf regelbar ist umfasst und mit einer ersten und oder zweiten Antriebsachse koppelbar ist,
und einem zweiten Triebstrang (201) mit einer zweiten Elektromaschine (203), der mit der ersten und/oder der zweiten Antriebsachse koppelbar ist
wobei die erste Elektromaschine (3) über eine Trennkupplung (7) an die Verbrennungskraftmaschine (2) koppelbar ist, und über die die erste und/oder zweite Elektromaschine (3, 203) jeweils ein Antriebsmoment bereitstellbar ist, und eine Steuerung (15) vorgesehen ist, die dazu eingerichtet ist, das Verfahren nach einem der Ansprüche 1 bis 9 auszuführen.

## Claims

1. Method for starting an internal combustion engine of a hybrid vehicle, comprising
a first powertrain (1) which has an internal combustion engine (2), a first electric machine (3) and a gearbox mechanism (5), it being possible for the first electric machine (3) to be coupled to the internal combustion engine (2) via a disconnect clutch (7) and to a first and/or second drive axle via a drive clutch (6), of which the slip is controllable,
a second powertrain (201) comprising a second electric machine (203) which can be coupled to the first and/or second drive axle,
it being possible for a drive torque to be provided via the first and second electric motors (3, 203),
**characterized by** the steps of:
from a first time (tv), operating the first electric machine (3) and actuating the drive clutch (6) such that a torque of the first electric machine (3) which acts via the first powertrain (1) is reduced by a torque value (R), and operating the second electric machine (203) such that a torque of the second electric machine (203) which acts via the second drive train (201) is correspondingly increased by the torque value (R),
from a second time (t0), operating the drive clutch (6) so that the speed of the first electric machine (3) is increased using the torque value (R), and, from a third time (t1), at least partly closing the disconnect clutch (7) such that the speed of the internal combustion engine (2) is thereby increased until a start criterion is reached so that the internal combustion engine (2) supports a starting process itself.

2. Method according to claim 1, wherein the torque value (R) can be determined depending on an operating state of the internal combustion engine (2).

3. Method according to claim 2, wherein the torque value (R) is higher in a cold start criterion than in a warm start criterion.

4. Method according to any of the preceding claims, wherein the disconnect clutch (7) is closed such that an angular momentum of the first electric machine (3) is transmitted to the internal combustion engine (2).

5. Method according to any of the preceding claims, comprising, from a fifth time (t3), operating the first electric machine (3) such that the first electric machine (3) also provides a component of the drive torque via the drive clutch (6) and operating the internal combustion engine (2) such that it exerts a torque, via the disconnect clutch (7), on the first electric machine (3) and thus via the first powertrain (1).

6. Method according to any of the preceding claims, wherein, from a fourth time (t2), the speeds of the internal combustion engine (2) and of the first electric machine (3) are synchronous.

7. Method according to claim 6, wherein, from the fourth time (t2), the drive clutch (6) is continuously set from a macro-slip operation into a micro-slip operation.

8. Method according to any of the preceding claims, wherein, from a fifth time (t3), the drive torque provided by the first electric machine (3) is reduced and is provided by the internal combustion engine (2) from a sixth time (t4).

9. Method according to any of claims 5 to 8, comprising operating the second electric machine (203) such that its torque which acts via the second powertrain (201) is adapted according to the torque that the internal combustion engine (2) and/or the first electric machine (3) exerts over the first powertrain (1).

10. Hybrid vehicle comprising a first powertrain (1) which has an internal combustion engine (2), a first electric machine (3) and a gearbox mechanism (5) comprising a drive clutch (6), of which the slip is controllable, and can be coupled to a first and/or second drive axle, and a second powertrain (201) comprising a second electric machine (203) which can be coupled to the first and/or the second drive axle,
wherein the first electric machine (3) can be coupled to the internal combustion engine (2) via a disconnect clutch (7), and via which the first and/or second electric machine (3, 203) can each be provided with a drive torque, and a controller (15) is provided, which is configured to carry out the method according to any of claims 1 to 9.

## Revendications

1. Procédé pour le démarrage d'un moteur à combustion interne d'un véhicule hybride comportant un premier train d'entraînement (1), qui comprend un moteur à combustion interne (2), un premier moteur électrique (3) et une transmission (5), dans lequel le premier moteur électrique (3) peut être couplé par l'intermédiaire d'un embrayage de séparation (7) au moteur à combustion interne (2) et par l'intermédiaire d'un embrayage de conduite (6), dont le patinage est réglable, à un premier et/ou un second essieu moteur,
un second train d'entraînement (201) comportant un second moteur électrique (203) qui peut être couplé au premier et/ou au second essieu moteur,
dans lequel un couple d'entraînement peut être mis à disposition respectivement par l'intermédiaire du premier et du second moteur électrique (3, 203),
**caractérisé par** les étapes:
à partir d'un premier instant (tv) fonctionnement du premier moteur électrique (3) et actionnement de l'embrayage de conduite (6) de sorte qu'un couple du premier moteur électrique (3) agissant par l'intermédiaire du premier train d'entraînement (1) est réduit d'une quantité de couple (R) et fonctionnement du second moteur électrique (203) de telle sorte qu'un couple du second moteur électrique (203) agissant par l'intermédiaire du second train d'entraînement (201) est augmenté en conséquence de la quantité de couple (R),
à partir d'un deuxième instant (t0) fonctionnement de l'embrayage de conduite (6) afin que la vitesse de rotation du premier moteur électrique (3) soit augmentée en utilisant la quantité de couple (R) et à partir d'un troisième instant (t1) fermeture au moins partielle de l'embrayage de séparation (7) de telle sorte que, par ce biais, la vitesse de rotation du moteur à combustion interne (2) soit augmentée jusqu'à atteindre un critère de démarrage, de manière à ce que le moteur à combustion interne (2) supporte lui-même un processus de démarrage.

2. Procédé selon la revendication 1, dans lequel la quantité de couple (R) peut être déterminée en fonction d'un état de fonctionnement du moteur à combustion interne (2).

3. Procédé selon la revendication 2, dans lequel la quantité de couple (R) est supérieure pour un critère de démarrage à froid que pour un critère de démarrage à chaud.

4. Procédé selon l'une des revendications précédentes, dans lequel l'embrayage de séparation (7) est fermé de telle sorte qu'une impulsion de rotation du premier moteur électrique (3) est transmise au moteur à combustion interne (2).

5. Procédé selon l'une des revendications précédentes, comportant le fonctionnement du premier moteur électrique (3) à partir d'un cinquième instant (t3) de telle sorte que le premier moteur électrique (3) continue à fournir une partie du couple d'entraînement par l'intermédiaire de l'embrayage de conduite (6) et fonctionnement du moteur à combustion interne (2) de telle sorte qu'il exerce un couple sur le premier moteur électrique (3) par l'intermédiaire de l'embrayage de séparation (7) et donc par l'intermédiaire du premier train d'entraînement (1).

6. Procédé selon l'une des revendications précédentes, dans lequel à partir d'un quatrième instant (t2), les vitesses de rotation du moteur à combustion interne (2) et du premier moteur électrique (3) sont synchrones.

7. Procédé selon la revendication 6, dans lequel à partir du quatrième instant (t2), l'embrayage de conduite (6) est placé en continu d'un mode de macro-patinage à un mode de micro-patinage.

8. Procédé selon l'une des revendications précédentes, dans lequel à partir d'un cinquième instant (t3) le couple d'entraînement mis à disposition par le premier moteur électrique (3) est réduit et à partir d'un sixième instant (t4) est mis à disposition par l'intermédiaire du moteur à combustion interne (2).

9. Procédé selon l'une des revendications 5 à 8, comportant le fonctionnement du second moteur électrique (203) de telle sorte que son couple agissant par l'intermédiaire du second train d'entraînement (201) soit adapté en fonction du couple exercé par le moteur à combustion interne (2) et/ou le premier moteur électrique (3) par l'intermédiaire du premier train d'entraînement (1).

10. Véhicule hybride comportant un premier train d'entraînement (1), qui comprend un moteur à combustion interne (2), un premier moteur électrique (3) et une transmission (5) comportant un embrayage de conduite (6), dont le patinage est réglable et pouvant être couplé à un premier ou un second essieu moteur,
et un second train d'entraînement (201) comportant un second moteur électrique (203) qui peut être couplé au premier et/ou au second essieu moteur
dans lequel le premier moteur électrique (3) peut être couplé par l'intermédiaire d'un embrayage de séparation (7) au moteur à combustion interne (2) et par le biais duquel le premier et/ou le second moteur électrique (3, 203) peut fournir respectivement un couple d'entraînement et une commande (15) est prévue, qui est conçue pour exécuter le procédé selon l'une des revendications 1 à 9.
